# EUROPÄISCHE PATENTSCHRIFT

(11) **EP 0 797 903 B1**
(45) Veröffentlichungstag und Bekanntmachung des Hinweises auf die Patenterteilung: **18.07.2001**
(21) Anmeldenummer: 95941009.3
(22) Anmeldetag: 23.11.1995
(51) Int. Cl.: H04Q 11/04

(54) **ÖFFENTLICHER KOMMUNIKATIONSDIENST MIT MEHRFACHNUTZUNG VON FERNVERBINDUNGEN**
PUBLIC COMMUNICATIONS SERVICE WITH MULTIPLE ACCESS USE OF TRUNK LINKS
SERVICE DE COMMUNICATIONS PUBLIC PERMETTANT L'UTILISATION EN MODE ACCES MULTIPLE DE LIAISONS INTERURBAINES

(30) Priorität: 12.12.1994 DE 4444153
(43) Veröffentlichungstag der Anmeldung: 01.10.1997
(73) Patentinhaber: SIEMENS AKTIENGESELLSCHAFT, 80333 München (DE)
(72) Erfinder: Lechner, Robert, 81379 München (DE)
(86) Internationale Anmeldenummer: EP9504630
(87) Internationale Veröffentlichungsnummer: WO9619090

(56) Entgegenhaltungen:
- EP-A- 0 570 749
- DE-A- 4 432 458
- US-A- 5 115 425
- WORLD PROSPERITY THROUGH COMMUNICATIONS, BOSTON, JUNE 11 - 14, 1989, Bd. 3 OF 3, 11.Juni 1989, INSTITUTE OF ELECTRICAL AND ELECTRONICS ENGINEERS, Seiten 1149-1153, XP000075342 SUNDARESHAN M K ET AL: "DESIGN AND DEPLOYMENT OF AN INTEGRATED DATA CIPHERING UNIT INSIDE A LOW BIT RATE VOICE TRANSCODER FOR SECURE VOICE COMMUNICATIONS OVER TELEPHONE NETWORKS"
- GLOBECOM '85; SESSION 18, PAPER 3; , Bd. 2, 2.Dezember 1985, NEWE ORLEANS, US, Seiten 557-561, XP002001292 S.S. KANWAL E.A.:

## Beschreibung

Diese Erfindung bezieht sich auf ein Verfahren für die Mehrfachnutzung von bittransparenten Wähl- und Standverbindungen im ISDN durch beliebige Teilnehmer und eine Einrichtung zur Durchführung des Verfahrens. Üblicherweise wird im ISDN (Integrated Services Digital Network) zwischen den Teilnehmern stets individuell eine Verbindung aufgebaut, die auch in der Fernebene 64 kbit/sec überträgt, wenn der Teilnehmer dies so signalisiert. Im ISDN gibt es derzeit keine Möglichkeit, die Bitrate dieser bittransparenten Wähl- oder Standverbindungen für mehrere, voneinander unabhängige Sprechverbindungen gleichzeitig zu nutzen. Das erfindungsgemäße Verfahren soll über das bestehende Netz für alle Teilnehmer kostengünstige Ferngespräche dadurch ermöglichen, daß Femverbindung durch mehrere Teilnehmer gleichzeitig genutzt werden. Dies führt zur Einsparung an Verbindungsgebühren. Die Verbindungs-Mehrfachnutzungs-Einrichtung zur Durchführung des Verfahrens wird im Folgenden, der Funktion entsprechend, ISDN Link Sharing System (ILSS) genannt. Mit dieser ILSS-Einrichtung ist ein Telefoniedienst zu günstigen Gebühren realisierbar.

Funktionen und Dienste des ISDN sind, ebenso wie die Schnittstellen zu Standleitungen, bekannt und weitgehend in internationalen Standards festgelegt. Weiters sind die Schnittstellen für digitale Leitungsbündel zwischen Vermittlungsstellen, wie ISDN- Primary Access (PA) und ISDN No.7 bekannt. Darüber hinaus ist auch eine sehr leistungsfähige Signalisierung über das Netz zwischen Teilnehmern und ISDN- Nebenstellenanlagen (ISDN-NStAn) gegeben. Damit ist auch der Aufbau von virtuellen privaten Netzen möglich. Auch können mehrere Kanäle zu Hyperkanälen zusammengefaßt werden, wobei die "Bit Sequenz Integrity" erhalten bleibt. Die für private Einrichtungen verfügbaren ISDN- Netzschnittstellen sind derzeit der Basic Access (BA) und der PA.

Bekannt sind zahlreiche Verfahren und Einrichtungen zur Bitratenreduktion für Sprache und Daten einschließlich solcher mit statistischem Multiplexen zur Ausnutzung der Sprachpausen. Für die Erfindung ist es unerheblich, welches dieser Verfahren für den angestrebten Dienst zum Einsatz kommt.

In der privaten Nutzung des Telefondienstes ist es heute schon in einigen Ländern möglich, daß für Fernverbindungen zwischen Nahbereichen (Local Service Area = LSA) die Teilnehmer- Nummer eines privaten Fernnetz- Betreibers angewählt wird. Diese Betreiber nutzen fallweise Einrichtungen, die auch eine Sprachkomprimierung auf Übertragungswegen durchführen. Von Netzbetreibern werden in Weitverkehrsnetzen ebenfalls Einrichtungen zur Bitratenreduktion eingesetzt. Ein Beispiel, kombiniert mit digitaler Verschlüsselung, findet sich im IEEE-Conference Record, ICC, Boston 1989, Seiten 1149 bis 1152. Diese Einrichtungen werden an interne Schnittstellen des Telefonnetzes angeschlossen, werten die Teilnehmer-Signalisierung nicht aus und führen auch keine Vermittlungsfunktionen durch. Für Verbindungen zwischen NStAn ist die Möglichkeit der Mehrfachnutzung von Standleitungen durch Bitratenreduktion ebenfalls bekannt.

Beispiele für die Mehrfachnutzung von Standleitungen, auch für die gemeinsame Übertragung von Sprache und Daten, sind zahlreich: Patentschrift WO91/03901; Patentschrift EP 504757 A2, Kl. H04Q-011/04. Als Beispiel zur Vernetzung von Rechnern über das ISDN siehe WO92/21216. Bekannt sind auch Einrichtungen zur Mehrfachnutzung von bittransparenten Standleitungen, deren teilnehmerseitigen Endpunkte auch über Wählleitungen aus dem PSTN erreichbar sind (siehe z.B. ntz Bd. 47 (1994), Heft 11, Seite 791).

Weiters sind virtuelle private Netze über das ISDN realisiert und bekannt: Siehe "elektrisches Nachrichtenwesen", Band 64 (1990) Nummer 1, Seiten 65 bis 70 und "ntz", Band 47 (1994) Heft 11, Seiten 782 bis 785. Teilnehmer, die nicht Teilnehmer des virtuellen privaten Netzes sind, können dabei keine beliebigen fernen Teilnehmer erreichen.

Von der nachfolgend beschriebenen Erfindung benutzte Funktionen des ISDN sind das Senden der rufenden Teilnehmernummer zum gerufenen Teilnehmer (Calling Line Identifikation = CLI), eine benutzerindividuelle Zeichengabe (Service 1 It. ETSI) beim Verbindungsaufbau und die Teilnehmer- Teilnehmer-Signalisierung s', die alle im D-Kanal übertragen werden.

Die Möglichkeiten des ISDN und der digitalen Sprachkomprimierung auch für Wählverbindungen zwischen NStAn zu nutzen, ist in der österreichische Patentschrift AT 400.652 (AT30373/93) beschrieben. Zwischen derart ausgerüsteten NStAn sind Standleitungen meist entbehrlich. In dieser letztgenannten Patentanmeldung ist u.a. die Betriebsweise der Signalumsetzer für die Bitratenreduktion von der ISDN-Signalisierung des fernen Teilnehmers abhängig.

Mit den bekannten Lösungen ist es einem unabhängigen Betreiber eines Telekommunikations- Dienstes nicht möglich, für beliebige Teilnehmer die Mehrfachnutzung von ISDN-Wählleitungen und Standleitungen zu ermöglichen. Diese Einrichtungen erfassen z.B. keine Daten für die Gebührenrechnung an einzelne Teilnehmer und führen keine Berechtigungsprüfung durch. Genau dieses wäre aber erforderlich, um einen kostengünstigen Telefoniedienst aufzubauen, der kein eigenes Fernleitungsnetz benötigt. Weiters ist es mit den bekannten Lösungen auch nicht möglich, daß beliebige Teilnehmer über mehrfachgenutzte ISDN-Leitungen andere Teilnehmer an einer fernen ISDN- NStA über eine Einrichtung zur Mehrfachnutzung bittransparenter Verbindungen direkt erreichen, d.h. ohne Umweg über eine ferne ILSS-Einrichtung oder über eine nahe NStA eines virtuellen privaten Netzes.

Die Aufgabe der Erfindung ist ein Verfahren für die Mehrfachnutzung von bittransparenten Wähl- und Standverbindungen (B) im dienstintegrierten Digitalnetz ISDN durch mehrere voneinander unabhängige Teilnehmer, insbesonders für Sprachdienste über Fernverbindungen, und eine Einrichtung zur Durchführung des Verfahrens, so daß keine Rückwirkung auf das ISDN gegeben ist. Weiters soll diese ILSS-Einrichtung wahlweise auch mit einer Einrichtung nach AT 400.652 (AT30373/93) zur Mehrfachnutzung von ISDN- Verbindungen zwischen NStAn (M(x)-Einrichtung) zusammenarbeiten. Die vorteilhafte Nutzung der ILSS-Einrichtung soll für.alle Teilnehmer offen sein, in deren LSA eine ILSS-Einrichtung an eine ISDN- Vermittlung angeschlossen ist, wenn der gerufene Teilnehmer ebenfalls über eine ferne ILSS-Einrichtung erreichbar ist. Dabei kann die dem gerufenen Teilnehmer nächste ILSS-Einrichtung an eine ISDN- Vermittlung in der fernen LSA angeschlossen sein oder in die Übergangsstelle zum Netz des neuen Betreibers eingefügt werden. Weiters sollen Standleitungen zwischen den ILSS-Einrichtungen zur Mehrfachnutzung von ISDN- Fernverbindungen mitbenutzt werden, soweit deren Kapazität ausreicht.

Im weiteren Text wird folgende Schreibweise verwendet: "A" als erster Buchstabe kennzeichnet den rufenden Teilnehmer, bzw. die LSA und die ILSS-Einrichtung, die der rufende Teilnehmer abgehend benützt. Der Buchstabe "B" kennzeichnet den gerufenen Teilnehmer bzw. jene LSA und ILSS-Einrichtung, über die der gerufene Teilnehmer ankommend erreicht wird. Weiters wird in der folgenden Beschreibung zwischen Nutzkanal (N) und bittransparentem 64-kbit/sec-Basiskanal (B) unterschieden, wobei in der Fernebene im Nutzkanal (N) das Nutzsignal mit einer wesentlich kleineren Bitrate übertragen wird als in einer bittransparenten Verbindung.

Mit der erfindungsgemäßen ILSS-Einrichtung sollen die zeitabhängigen Gebühren für Fernverbindungen gesenkt werden. Die Erreichbarkeit aller anderen Teilnehmern über das ISDN oder PSTN (Public Switched Telecommunication Network) bleibt unbeeinträchtigt. Die Betreiber des Fernnetzes (LODIN = Long Distance ISDN) und der LSA benötigen nur ISDN- Leistungsmerkmale in deren Systemen.

Die Aufgabe wird erfindungsgemäß dadurch gelöst,
daß in zumindest zwei unterschiedlichen Nahbereichen (LSA) an zumindest je eine ISDN- Vermittlungsstelle zumindest je eine Einrichtung zur Verbindungs-Mehrfachnutzung (=ILSS-Einrichtung) angeschlossen ist,
daß die vom rufenden Teilnehmer (A-Tln) angewählte ILSS-Einrichtung (A-ILSS) zusätzliche Signalisierungs- Information empfängt, daß die Berechtigung des rufenden Teilnehmers geprüft wird, daß Signalisierungen zwischen dieser vorgenannten Einrichtung (A-ILSS) und der dem gerufenen Teilnehmer (B-Tln) nahen ILSS-Einrichtung (B-ILSS) ausgetauscht werden,
daß ein Nutzkanal (N) zur fernen ILSS-Einrichtung (B-ILSS) bereitgestellt wird, daß der ferne Teilnehmer (B-Tln) über die ihm nahe ILSS-Einrichtung (B-ILSS) angewählt und mit dessen Melden vom rufenden Teilnehmer (A-Tln) zum gerufenen Teilnehmer (B-Tln) ein Nutzkanal (N) hergestellt und bis zum Auslösen der Verbindung gehalten wird,
und daß die über das ISDN- Femnetz (LODIN) übertragenen Nutzsignale in den ILSS-Einrichtungen (ILSS) vor dem Senden und nach dem Empfangen über mindestens für zwei Nutzkanäle (N) vorhandene digitale Signalumsetzer (TC) geführt werden, die in Senderichtung die Signalbitrate reduzieren und in Empfangsrichtung das ursprüngliche Digitalsignal wieder rekonstruieren, so daß die bittransparenten 64-kbit/sec-Basiskanäle (B) zwischen den ILSS-Einrichtungen (ILSS) eine deren Anzahl überschreitende Zahl von Nutzkanälen (N) transportieren können.

Eine erste Weiterbildung ist dadurch gekennzeichnet, daß die Verbindungs-Mehrfachnutzungs-Einrichtungen (ILSS) automatisch untereinander über das ISDN- Fernnetz (LODIN) bittransparente Wählverbindungen aufbauen, halten und abbauen, deren jeweilige Anzahl stets nur so groß ist, wie für die Übertragung der jeweiligen Summen- Bitrate auf Wähl- und Standleitungen erforderlich.

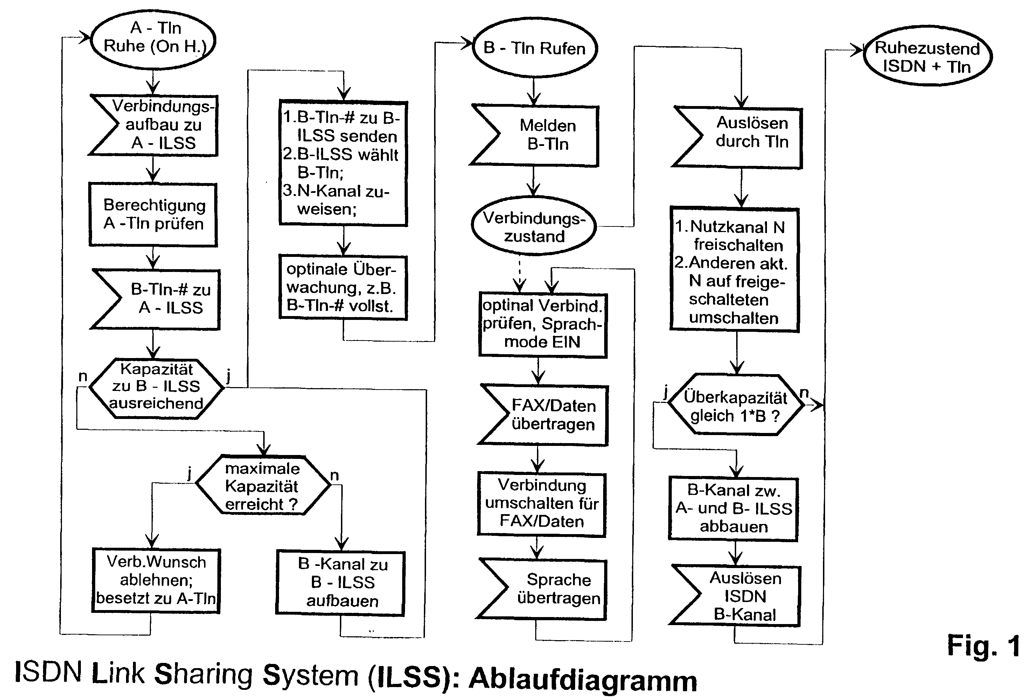

Für die Lösung der Aufgabe werden üblicherweise in mehreren LSAs erfindungsgemäße Einrichtungen ILSS zur Mehrfachnutzung von bittransparenten ISDN-Verbindungen an eine ISDN- Vermittlungsstelle angeschlossen, wobei diese wiederum über das ISDN- Fernnetz (LODIN) vernetzt sind. Die Einrichtungen ILSS können über Wähl- und Standleitungen auch mit Netzknoten- Servern verbunden sein, welche sprachkomprimierte Nutzkanäle (N) vermitteln. Für den Netzübergang vom traditionellen zum neuen Betreiber wird in zumindest einen Teil der Schnittstelle eine Einrichtung ILSS eingefügt. Von dieser ist ein Teil der Anschlußleitungen mit dem Netz der traditionellen und ein anderer Teil der Anschlußleitungen mit dem Netz des neuen Betreibers verbunden. Der prinzipielle Ablauf des Verfahrens nach Anspruch 1 und 2 ist in Fig.1 dargestellt.

Für die Mehrfachnutzung der bittransparenten Verbindungen enthält die Einrichtung ILSS digitale Signalumsetzer (TC = Transcodierer) zur Reduktion der Signalbitrate. Das Verfahren kann auch von einer ISDN- NStA genutzt werden, wenn diese mit den dazu nötigen Funktionseinheiten erweitert wird oder über eine funktionskompatible Vorschalte- M(x)-Einrichtung an das ISDN angeschlossen ist.

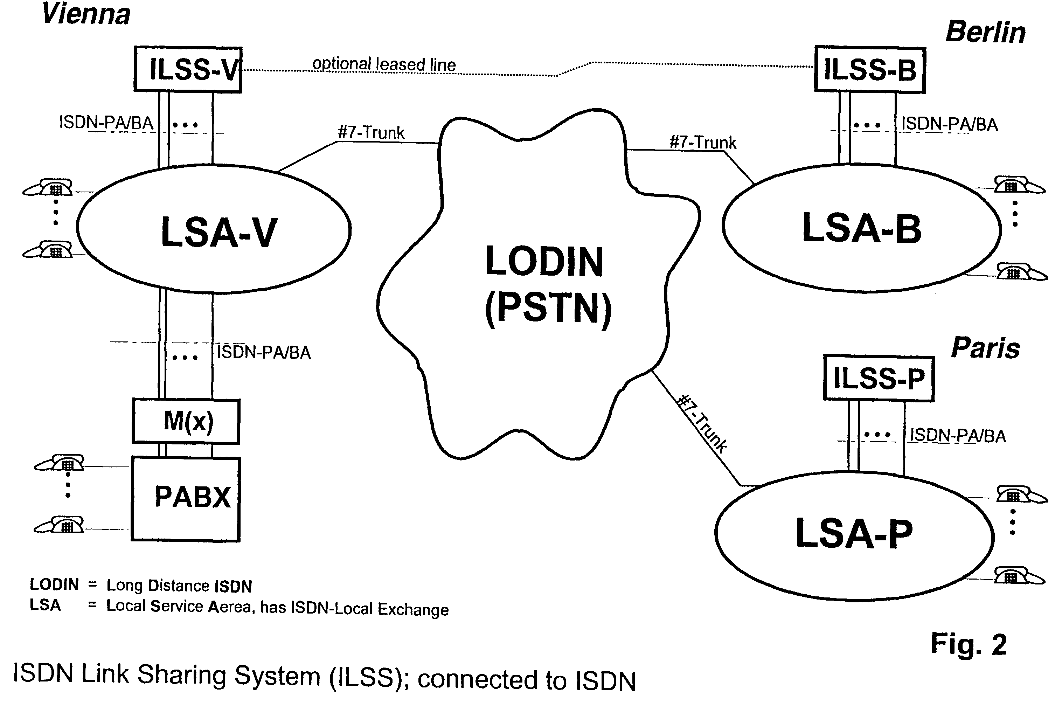

Die Einrichtungen ILSS werden über ISDN-Schnittstellen wie NStAn mit Durchwahl an eine ISDN- Ortsvermittlungsstelle (OVSt) in der jeweiligen LSA angeschlossen, wie in Fig. 2 dargestellt. Als ISDN-Anschluß können ein oder mehrere ISDN BA oder ISDN PA verwendet werden. Weiters sind auch Standleitungen zwischen den ILSS-Einrichtungen möglich. Die Anzahl der BA, PA und Standleitungen ergibt sich aus dem erwarteten Verkehrsaufkommen, die Aufteilung aus rein wirtschaftlichen Überlegungen. Die ILSS-Einrichtungen können auch wie zwei NStAn über zwei Leitungsbündel mit unterschiedlichen NStA- Rufnummern an die ISDN- Vermittlungsstelle angeschlossen werden. Die erste Rufnummer wird für die Nutzung durch die Teilnehmer in der LSA öffentlich bekanntgegeben. Die zweite Rufnummer gehört zu einer im ISDN eingerichteten "Closed User Group" für Wählverbindungen zwischen den ILSS-Einrichtungen. Dadurch wird verhindert, daß Unbefugte die Kapazität der Inter- ILSS- Wählverbindungs- Leitungen blockieren können.

Die ISDN- Ortsvermittlungen, an welche die Einrichtungen ILSS angeschlossen sind, sind selbst über Verbindungsleitungen (Trunk Lines) mit einer für ISDN geeigneten Common Channel Signalling (CCS) an das Femnetz LODIN angeschlossen oder untereinander verbunden. Die Nutzung des Verfahrens hat auch auf ein privates Fern netz keine Rückwirkung, da der Aufbau bittransparenter Verbindungen per ISDN-Signalisierung erzwungen wird. Alternativ könnte ein privater Betreiber die ILSS-Einrichtung auch an eine geeignete Schnittstelle einer Fernvermittlung anschließen, beispielsweise auch zwischen seinem Ortsnetz und einem anderen Fernnetz.

Damit die ILSS-Einrichtungen auch A- und B- Teilnehmer verbinden können, sorgen diese selbsttätig für den Aufbau und Abbau von Wählverbindungen untereinander. Bei jedem Verbindungswunsch wird geprüft, ob in den bereits bestehenden bittransparenten Basiskanälen noch Subkanäle frei sind, die für einen Nutzkanal (N) verwendbar sind (siehe Fig. 1). Üblicherweise wird ein Nutzkanal (N) für eine Sprechverbindung verwendet. Ein bittransparenter Basiskanal (B) wird zweckmäßigerweise in Bruchteile (b) aufgeteilt, so daß ein Bruchteil (b), z.B. 8, einem Nutzkanal (N) entspricht.

Für die Signalisierung zwischen den ILSS-Einrichtungen bestehen mehrere Möglichkeiten. Eine erste Lösung ist, einen Bruchteil b' des zuerst aufgebauten Basiskanals zu reservieren und für eine CCS zwischen diesen Einrichtungen zu nutzen. Dieser Basiskanal wird - falls nicht über eine Standleitung geführt - erst mit dem Abbau des letzten Nutzsignalweges (N) zwischen zwei Einrichtungen ILSS abgebaut. Überschreitet die Anzahl der Nutzkanäle einen Wert a, erfolgt mit dem Aufbau des nächsten angeforderten Nutzkanals (N) auch der eines weiteren Signalisierungskanals (S). Eine zweite Möglichkeit besteht in der Nutzung der User to User Signalisierung s' des ISDN oder darin, im D-Kanal die Signalisierung als p-Daten zu übertragen. Die geringste Verzögerungszeit in der Signalisierung wird mit der erstgenannten Lösung erreicht.

Für die weiter oben erwähnten digitalen Signalumsetzer (TC) werden je nach Art des Nutzsignals oder aufgrund spezieller Signalisierung durch den Teilnehmer unterschiedliche Betriebsweisen verwendet. Hauptziel ist dabei stets, die Bitrate für das Nutzsignal zu reduzieren.

Eine erste Betriebsweise dieser digitalen Signalumsetzer ist dabei die eines Transcodierers (TC), wobei die digitalisierte Sprache auf einen Bruchteil b komprimiert wird, so daß mehrere Nutzkanäle (N), die jeweils nur einen Bruchteil b einer bittransparenten Verbindung (B) nutzen, über diese gleichzeitig übertragen werden können.

Eine zweite Betriebsweise dieser digitalen Signalumsetzer ist dabei die eines Telefax/Daten- Modems. Die in Digitalsignale umgesetzten Telefax/Daten Signale werden dabei in einen Bruchteil b einer bittransparenten Verbindungen (B) übertragen, woraus in Empfangsrichtung wieder digitalisierte analoge Signale für den Empfang durch das ferne Telefax/Daten- Modems erzeugt werden. In diesem Fall kann in einer Weiterbildung der digitale Signalumsetzer zur Funktion eines FAX-Servers erweitert werden, der die FAX-Daten teilweise zwischenspeichert.

Ausgangspunkt des Verfahrens nach Fig. 1 ist dabei die Anwahl der Einrichtung A-ILSS durch den A-Teilnehmer. Für die Prüfung der Nutzungsberechtigung des A-Tln sind erfindungsgemäß zwei Lösungsmöglichkeiten vorgesehen. Die Prüfung der Nutzungsberechtigung ist nur für abgehende Gespräche, also für A-Tln, erforderlich, damit sichergestellt ist, daß eine eindeutige Kostenzuordnung gewährleistet ist.

Ein erstes Verfahren ist die automatische Prüfung der Nutzungsberechtigung durch die ILSS-Einrichtung. In diesem Fall ist Voraussetzung, daß der A-Tln an einer OVSt betrieben wird, die das Leistungsmerkmal "CLI" aufweist. Mit der Anwahl aus dem ISDN empfängt die Einrichtung ILSS auch die CLI des A-Tln's, welche dessen Anschluß eindeutig kennzeichnet. In einer ersten Art der automatischen Prüfung ist jeder Teilnehmer a priori nutzungsberechtigt, der nicht in einer Sperrliste eingetragen ist. In einer zweiten Art der automatischen Prüfung ist ein Teilnehmer erst dann nutzungsberechtigt, wenn im Teilnehmer- Datensatzes die seinen Anschluß kennzeichnende CLI eingetragen ist. Die erstgenannte Art hat zwar den Vorteil, daß für den Anwender die Schwelle für die Nutzung klein ist, erfordert aber, daß die zur CLI gehörende Rechnungsanschrift nachträglich ermittelt werden kann.

Ein zweites Verfahren ist die halbautomatische Prüfung der Nutzungsberechtigung durch die ILSS-Einrichtung. In diesem Fall ist die CLI des rufenden Teilnehmers nicht verfügbar, z.B. deshalb, weil dieser an einer OVSt in alter Technik angeschlossen ist. In diesem Fall muß sich der A-Tln durch Kennziffern gegenüber der ILSS-Einrichtung ausweisen. Dafür sind nun wieder mehrere Untervarianten, wie aus anderen Applikationen bekannt, möglich. In einer Variante enthält die ILSS-Einrichtung auch DTMF Code Receiver (Empfänger für Tastwahlzeichen). Die ILSS-Einrichtung erkennt am Fehlen einer vollständigen CLI, daß die halbautomatische Prüfung der Nutzungsberechtigung gestartet werden muß. In diesem Zustand wartet die Einrichtung auf den Empfang der entsprechenden Kennziffern. Zusätzlich kann im Wartezustand die ILSS-Einrichtung den Benutzer durch Ansagen oder Hörtöne auffordern, die fehlenden Teile der Kennziffern einzugeben und bei unkorrekter Eingabe diese zu wiederholen. Ein Vorteil dieser Technik besteht darin, daß der Benutzer nicht an einen bestimmten Telefonanschluß gebunden ist.

Nach positiver Prüfung der Nutzungsberechtigung wird weitere zusätzliche Signalisierungsinformation des A-Tln von der Einrichtung A-ILSS aufgenommen und verarbeitet. Die Aufnahme dieser zusätzliche Signalisierungsinformation erfolgt z.B. in gleicher Weise wie eine ISDN-NStA Durchwahlinformation aufnimmt, die das Netz aus der vom Teilnehmer kommenden Wahlinformationen erzeugt. In einer zweiten Art wird die Durchwahlinformation in gleicher Weise aufgenommen, wie diese von der rufenden Einrichtung übertragen wird. Die Art und Weise der Aufnahme von Durchwahlinformation ist in den Konfigurationsdaten festgelegt. Die zweite Art kommt z.B. bei Anruf des B-Tln's von einer NStA zur Anwendung, die über eine M(x)-Einrichtung zur Mehrfachnutzung von bittransparenten Verbindungen an das ISDN angeschlossen ist. Im Falle der automatischen Prüfung erfolgen diese Vorgänge nahezu gleichzeitig.

Aus einem ersten Teil der Durchwahlinformation wird ermittelt, zu welcher B-ILSS ein neuer Nutzkanal (N) hergestellt werden soll. Erfindungsgemäß prüft dabei die ILSS-Einrichtung jede empfangene Durchwahlnummer, ob diese auch eine ferne ILSS-Einrichtung kennzeichnet. Wählt der A-Tln eine ungültige Durchwahlnummer, signalisiert dies die A-ILSS durch einen Ton, z.B. "Falschwahl". Weiters wird geprüft, ob die Einrichtung ILSS noch genügend Kapazität hat, um einen weiteren Nutzkanal zur B-ILSS herzustellen. Dabei kann es vorkommen, daß bereits die Gesamtkapazität an Basiskanälen der Einrichtung ILSS erschöpft ist und auch zur gewünschten B-LSA alle Nutzkanäle (N) belegt sind. In diesem Fall erhält der A-Tln ein Besetzt- Zeichen. Im Regelfall ist aber Kapazität vorhanden.

Die Einrichtung A-ILSS prüft auch, ob zur B-ILSS bereits genügend Basiskanäle aufgebaut sind und weist bei positiver Prüfung der neuen Verbindungsanforderung einen freien Nutzkanal (N) zu. Bei negativer Prüfung wählt die Einrichtung A-ILSS eine neue bittransparente Verbindung zur B-ILSS für den neuen Nutzkanal, wobei in einer speziellen Ausführung diese Wahl verzögert erfolgt - z.B. bis zum Ruf beim B-Tln. Weiters prüft die Einrichtung A-ILSS, ob in diesem Fall auch die Signalisierungskapazität zur B-ILSS erhöht werden muß und reserviert bei Bedarf einen weiteren Bruchteil b' des neuen Basiskanals (B). Die Reihenfolge der hier beschriebenen Vorgänge kann auch modifiziert werden.

Weiters signalisiert die A-ILSS aufgrund der empfangenen Durchwahlinformation zur B-ILSS, welcher Teilnehmer in der B-LSA gerufen werden soll. Beispielsweise kann dies durch Übertragung der Rufnummer erfolgen, unter jener der B-Tln in dem Ortsnetz der B-ILSS erreichbar ist. Zusätzlich wird zur B-ILSS auch die Vorwahlnummer des gerufenen Teilnehmers signalisiert. Die B-ILSS verwirft diese, wenn sie mit der des eigenen Ortsnetzes identisch ist. Dies hat den Vorteil, daß auch benachbarte Ortsnetze, für die der gleiche Nahbereichstarif gilt, keine eigene ILSS-Einrichtung benötigen.

Mit der empfangenen Rufnummer des B-Tln's wählt die B-ILSS dann selbsttätig den B-Tln. Dabei können jedoch Besetztfälle auftreten. Tritt ein Besetztfall auf, empfängt die A-ILSS aus der B-LSA einen Besetztton oder auch eine entsprechende Signalisierung. Die A-ILSS sendet daraufhin Besetzttöne zum A-Tln.

Wie weiter oben erwähnt, sind digitale Signalumsetzer (TC) für unterschiedliche Umsetzfunktionen vorgesehen. Erfindungsgemäß enthalten die digitalen Signalumsetzer mindestens zwei Umsetzprogramme und ein Signaltyp- Erkennungsprogramm. Das erste Umsetzprogramm ist dabei das eines Transcodierers für Sprache, das zweite das eines FAX/Daten- Modems. Das Signaltyp- Erkennungsprogramm überwacht im Betriebszustand "Sprache", ob die Teilnehmer FAX oder Datenbetrieb wünschen. Werden die entsprechenden Töne bei gleichzeitiger Abwesenheit von Sprache entdeckt, schalten die digitalen Signalumsetzer in den Betriebszustand "FAX". In diesem Betriebszustand erkennt das Signaltyp- Erkennungsprogramm der digitalen Signalumsetzer, wenn im Nutzkanal statt Daten oder FAX wieder Sprache übertragen wird. Ist das der Fall, wird wieder in die Betriebsart "Sprache" umgeschaltet.

Wird eine Verbindung ausgelöst, prüfen die ILSS-Einrichtungen erfindungsgemäß sofort, ob ein Basiskanal (B) im Femnetz LODIN abgebaut werden kann. Dies ist dann der Fall, wenn die Summenbitrate aller Nutzkanäle (N) und aller über Basiskanäle führenden Signalisierungskanäle (S) um zumindest die Bitrate eines Basiskanals kleiner ist als jene, die über alle bestehenden Basiskanäle, einschließlich jener allenfalls verfügbarer Standleitungen, zur Verfügung steht.

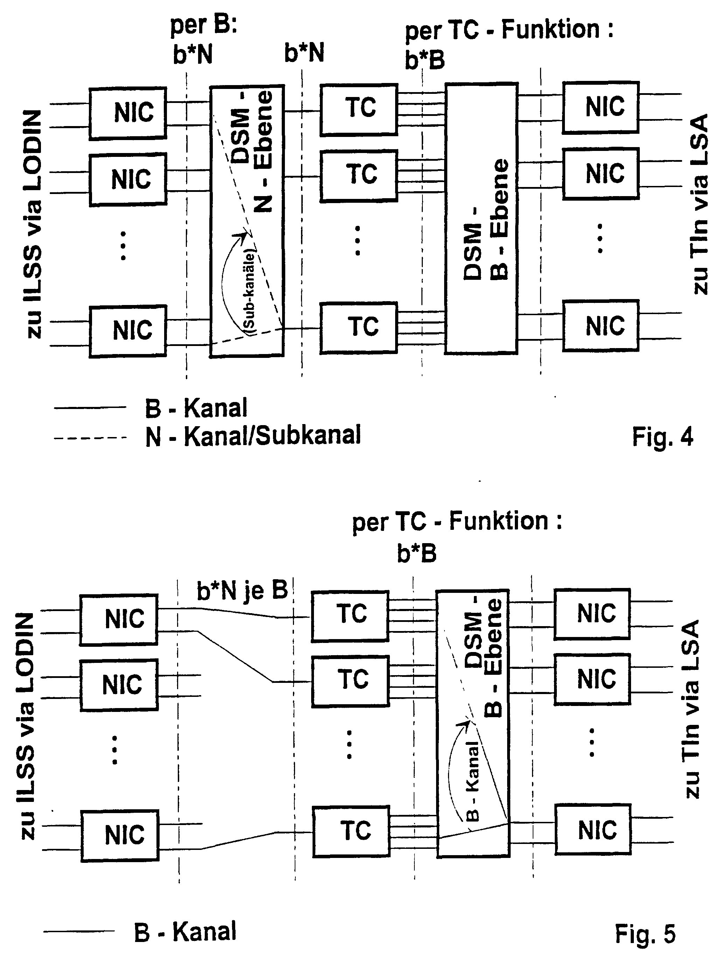

Wurde eine abzubauende Wählverbindung bestimmt, kann diese erst abgebaut werden, wenn darüber kein Nutzsignal mehr übertragen wird. Dazu werden die Nutzsignale dieser Wählverbindung auf die freie Kapazität der verbleibenden Verbindungen umgeschaltet. Dabei schaltet jede ILSS-Einrichtung das Nutzsignal zunächst in Senderichtung auf den freien Nutzkanal (N) und signalisiert dies der jeweils anderen ILSS-Einrichtung. Empfängt diese die Umschaltesignalisierung, so wird der Empfang des Nutzsignals sofort auf den neu belegten Nutzkanal (N) umgeschaltet. In der ILSS-Einrichtung kann die Umschaltung in der PCM-Ebene, wo das Nutzsignal mit 64 kbit/sec kodiert wird, oder in der Nutzkanal-Ebene auf Subbitraten von 64 kbitlsec erfolgen. Fig.4 und Fig.5 zeigen die entsprechenden Signalwege. Dabei entsteht ein Knackgeräusch, welches von der Art der Kodierung und der Unterbrechungszeit des Nutzsignalweges durch den Umschaltevorgang abhängt. Maßnahmen zur Geräuschreduktion sind bekannt und möglich.

Die ILSS-Einrichtung enthält für die Steuerung der des Verfahrens und die Bedienung einen Systemprozessor (SP). Dieser Systemprozessor enthält eine Reihe von Konfigurationsdaten. Diese bestehen aus mehreren Datensätzen. Für das Verfahren hält der SP in einen ersten Datensatz für die Berechtigungsprüfung nötigen Angaben und in einem weiteren Datensatz die teilnehmerindividuell angefallen Grunddaten für die Gebühren. Die Eingabe des Teilnehmer- Datensatzes kann von einem Bedienrechner aus erfolgen. Dieser könnte auch die Nachverarbeitung zum Erstellen der Rechnungen übernehmen.

In einem weiteren Datensatz enthält der Systemprozessor die Netzdaten. Diese enthalten Angaben, welche einerseits die Ortskennzahlen den Nahbereichen (LSA) zuordnet und die Rufnummern aller fernen Einrichtungen ILSS, mit denen zusammengearbeitet werden soll.

Die Aufgabe, daß eine ILSS-Einrichtung auch mit einer Einrichtung zur Mehrfachnutzung bittransparenter Verbindungen zwischen NStAn (M(x)) zusammenarbeitet, wie diese in der österreichischen Patentschrift 400.652 (identisch DE 44 32 458 A1) beschrieben ist, wird erfindungsgemäß dadurch gelöst. daß die ILSS-Einrichtung Konfigurationsdaten enthält, welche die berechtigten M(x)-Einrichtungen eindeutig kennzeichnen, daß die ILSS-Einrichtung bei der ersten Anwahl aus einer M(x)-Einrichtung den Basiskanals in gleicher Weise in Nutzkanäle (N) und Signalisierungkanäle strukturiert wie die anrufende M(x)-Einrichtung, daß die ILSS-Einrichtung digitale Signalumsetzer (TC) in gleicher Weise wie die M(x)-Einrichtung einstellt und zumindest in benutzte Nutzkanäle einfügt, daß die ILSS-Einrichtung von der M(x)-Einrichtung Durchwahlinformation aufnimmt und aufgrund dessen eine Verbindung zum gerufenen Teilnehmer herstellt.

Für den Betreiber der PABX mit der M(x)-Einrichtung ist diese Vorgangsweise dann vorteilhaft, wenn es häufiger vorkommt, daß mehrere Gespräche mit Partnern in der fernen LSA gleichzeitig geführt werden.

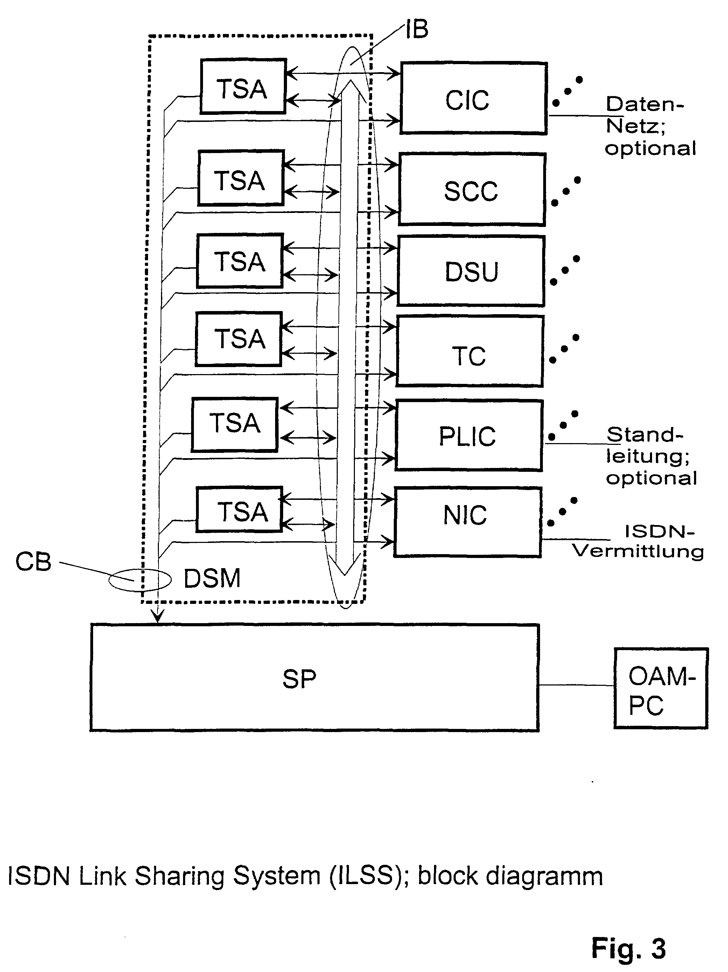

Im Folgenden wird die erfindungsgemäße Einrichtung zur Durchführung des Verfahrens beschrieben. Eine ILSS-Einrichtung zur Durchführung des Verfahrens wird erfindungsgemäß dadurch gebildet, daß die ILSS-Einrichtung mindestens einen Systemprozessor (SP), digitale Signalumsetzer (TC) für mindestens zwei Nutzkanäle, mindestens ein digitales Koppelfeld (DSM = Digital Switching Matrix) und amtsseitige ISDN- Schnittstellenschaltung (NIC) für mindestens drei Basiskanäle (B) enthält, daß die vorhin genannten Funktionseinheiten über mindestens ein Informationsleitungssystem (IB) untereinander und über mindestens ein Steuerleitungssystem (CB) mit dem Systemprozessor (SP) verbunden sind und daß der Systemprozessor (SP) einen Daten- und Programmspeicher enthält, in denen die für die Durchführung des Verfahrens und die für die Steuerung der Schnittstellenschaltungen benötigten Programme und Daten gespeichert sind (Fig.3).

In einer ersten Weiterbildung der erfindungsgemäßen ILSS-Einrichtung wird das digitale Koppelfeld (DSM) derart ausgebildet, daß Subkanäle individuell geschaltet werden können (Fig.4). In der einfachsten Art, einen Subkanal zu bilden, wird jedem Bit eines Oktetts, das üblicherweise ein bittransparent übertragenes "PCM-Wort" darstellt, ein eigener vermittelbarer Subkanal zugeordnet. Damit lassen sich transcodierte Nutzsignale wahlfrei in bittransparente Verbindungen (B) multiplexen und demultiplexen

Für die Signalisierung zwischen den ILSS-Einrichtungen dient der Subkanal Communication Controller (SCC). Über die DSM kann jedem Bruchteil b' eines Basiskanals (B), welcher für CCS zwischen diesen Einrichtungen ILSS genutzt wird, ein SCC zugeordnet werden. Die Anzahl der verwendeten SCC ist dabei zumindest so groß wie die Anzahl der Ziele, zu denen gleichzeitig mehrfachgenutzte bittransparente Verbindungen (B) bestehen.

In einer dritten Weiterbildung der erfindungsgemäßen ILSS Einrichtung enthält diese eine Digitale Service Unit (DSU) zum Empfangen von Tastwahl- und Leitungszeichen und zum Senden von Hörtönen und Ansagen. Diese DSU ist ebenfalls über das Informationsleitungssystem (IB) mit dem digitalen Koppelfeld DSM und über das Steuerleitungssystem (CB) mit dem Systemprozessor verbunden.

In einer vierten Weiterbildung der erfindungsgemäßen ILSS-Einrichtung enthält diese mindestens eine Schnittstellenschaltung (PLIC = Permanent Line Interface Circuit) für zumindest eine digitale Stand- Verbindungsleitung. Dieser PLIC dient zum Anschluß der Einrichtung ILSS an eine private oder gemietete Leitung des Betreibers. Dieser PLIC enthält mindesten ein Interface für 64 kbit/sec oder auch ein Interface für 2 Mbps nach CCITT G.703.

In einer alternativen Ausbildung der erfindungsgemäßen ILSS-Einrichtung sind die in Fernverbindungen führenden Schnittstellenschaltungen (NIC) bestimmten digitalen Signalumsetzern (TC) fest zugeordnet (Fig.5). Dies kann z.B. durch getrennte Leitungen erfolgen.

Zur Verknüpfung der Funktionseinheiten dient stets zumindest ein informationsleitungssystem (IB) und ein Steuerleitungssystem (CB). In einer bekannten Ausbildung ist die Übertragung über das IB in Zeitschlitzen strukturiert, wobei für Steuerungsaufgaben dem CB mindestes ein Zeitschlitz zugeordnet ist. Dies wird als "embedded control channel" bezeichnet.

In einer ersten Ausführung sind die vorhin erwähnten Funktionseinheiten in geeigneter Weise auf Baugruppen untergebracht und diese in einem Baugruppenträger montiert und verdrahtet.

In einer zweiten Ausführung sind die vorhin erwähnten Funktionseinheiten in geeigneter Weise in eine NStA integriert. Dabei dient als Systemprozessor (SP) der oder die Steuerungsrechner der NStA. Es werden vorhandene Schnittstellenbaugruppen (NIC) zum Anschluß an das ISDN und vorhandene Lösungen für die DSU eingesetzt. Diese NStA wird für die Durchführung des Verfahrens mit digitalen Signalumsetzern (TC) und bei Bedarf mit einem zum Schalten von Subkanälen geeigneten Koppelfeld und SCC hochgerüstet. Die Systemsoftware wird derart modifiziert, daß das vorhin beschriebene erfindungsgemäße Verfahren zusätzlich zu den Aufgaben der NStA durchgeführt wird.

In einer dritten Ausführung der Einrichtung dient ein Personal Computer oder eine Workstation (PC) als Systemprozessor. Für diese Arbeitsplatzsysteme sind geeignete ISDN- Schnittstellenbaugruppen verfügbar, die in den PC gesteckt werden. Der rechnerinterne BUS ist dabei so leistungsfähig, daß ein separates Koppelfeld (DSM) entbehrlich ist. Vielmehr enthalten alle Baugruppen, welche für die Einrichtung ILSS erforderlich sind, eine Schnittstellenschaltung für den BUS, welche ermöglicht, daß einzelne Basiskanäle und Nutzkanäle zwischen diesen Baugruppen vermittelt werden können. Weiters werden in diesen PC ein oder mehrere Baugruppen mit digitalen Signalumsetzem (TC) und bei Bedarf SCC gesteckt.

Die Realisierung der einzelnen Funktionsblöcke ist ansich bekannt. Der SP enthält einen oder mehrere Mikroprozessoren (MP), Programm- und Datenspeicher (ROM und RAM), optional einen Controller für Direct Memory Access (DMA) und Steuerbausteine für den Control BUS (CB) sowie zumindest eine Kommunikations- Schnittstelle, z.B. V.24, zum Anschluß eines externen PC für Betriebs- und Wartungsfunktionen. Für die digitalen Signalumsetzer kommen vorzugsweise digitale Signalprozessoren (DSP) zum Einsatz, wobei in einem DSP ein oder mehrere TC-Funktionen implementiert sind. Diese DSP werden entsprechend der benötigten Umsetzfunktion, wie weiter oben beschrieben, programmiert.

Die Funktion DSM kann auf sehr unterschiedliche Art und Weise realisiert sein. In einer ersten Art der Realisierung ist das digitale Koppelfeld als konzentrierte Funktion realisiert. Dabei kommen ein oder mehrere ASIC und/oder digitale Koppelfeldbausteine zum Einsatz. Eine besondere Form der Ausführung ermöglicht das Schalten von Subkanälen. In einer zweiten Art der Realisierung wird die Funktion des DSM verteilt realisiert, wie in Fig. 3 angedeutet. Dabei ist das Informationsleitungssystem (IB) in Zeitschlitzen strukturiert und die Funktion des DSM auf die Funktionseinheiten TC, NIC, DSU und SCC verteilt. Jeder dieser Module enthält dann eine mit TSA (Time Slot Assignment) bezeichnete Zugriffsschaltung auf diesen IB. Vermittelt wird dabei durch Zuweisung eine Sende- und Empfangszeitschlitzes für mindestens eine Leitung des IB durch den Systemprozessor.

Für den Funktionsblock NIC sind von namhaften Herstellern spezielle hochintegrierte Schaltkreise verfügbar. Um die dynamische Belastung für den SP gering zu halten, werden bevorzugt jene Schaltkreise eingesetzt, die Schicht 1 und Schicht 2 des Signalisierungs-Protokolles weitgehend automatisch bearbeiten. Gleiches gilt für den Kommunikations Controller Baustein, der als SCC eingesetzt ist. Falls erforderlich, insbesonders bei größeren Systemen, können für mehrere Funktionseinheiten auch regionale Prozessoren und Bausteine für interne Schnittstellen zusätzlich eingesetzt werden.

In Fig.2 und Fig.3 ist der teilnehmerseitige Netzabschluß NT (Network Termination) nicht dargestellt. Je nach Regulierung kann die NT Bestandteil der Einrichtung ILSS oder ein vom Netzbetreiber beim Teilnehmer installierter Anschluß sein.

Auf Netzebene erfüllen die ILSS-Einrichtungen auch noch weitere Funktionen, insbesonders für Betrieb und Wartung. Wird ein Netz mit der Installation weiterer ILSS-Einrichtungen ausgebaut, müssen in allen bereits installierten Einrichtungen Konfigurationsdaten nachgezogen werden. Dazu wird ein PC für Betrieb, Administration und Maintenance (OAM-PC) an das ISDN angeschlossen. Jede ILSS-Einrichtung hat eine bestimmte Durchwahlinformation in einer "Closed User Group" für diesen OAM-PC reserviert, welche den Zugang zum Systemprozessor (SP) ermöglicht.

Die Vorteile der erfindungsgemäßen ILSS-Einrichtung und des im Steuerungs- Programm festgelegten Betriebsverfahrens bestehen in einer Senkung der Gebühren, welche für ein gegebenes Verkehrsaufkommen bei Ferngesprächen anfällt. Diese Gebührensenkung kann von Betreibern der ILSS-Einrichtung genutzt werden, einen öffentlichen Telefoniedienst, den jeder nutzen kann, zu realisieren. Mit der Abdeckung von Spitzenlast über Wählverbindungen werden Standleitungen eingespart. Durch Kompatibilität mit einer M(x)-Einrichtung zur Mehrfachnutzung bittransparenter Verbindungen zwischen NStA können Firmen und Behörden eine höhere Gebühreneinsparung erzielen, sofern diese umfangreiche Sprechverbindungen mit Kunden in fernen Regionen unterhalten.

## Patentansprüche

1. Verfahren für die Mehrfachnutzung von bittransparenten Verbindungen (B) im dienstintegrierten Digitalnetz (=ISDN) durch mehrere voneinander unabhängige Teilnehmer mittels Verbindungs-Mehrfachnutzungs-Einrichtungen (ILSS),
**dadurch gekennzeichnet**,
daß in zumindest zwei unterschiedlichen Nahbereichen (LSA) an zumindest je eine ISDN- Vermittlungsstelle zumindest je eine Einrichtung zur Verbindungs-Mehrfachnutzung (=ILSS-Einrichtung) angeschlossen ist,
daß die vom rufenden Teilnehmer (A-Tln) angewählte ILSS-Einrichtung (A-ILSS) zusätzliche Signalisierungs- Information empfängt, daß die Berechtigung des rufenden Teilnehmers geprüft wird, daß Signalisierungen zwischen dieser vorgenannten Einrichtung (A-ILSS) und der dem gerufenen Teilnehmer (B-Tln) nahen ILSS-Einrichtung (B-ILSS) ausgetauscht werden,
daß ein Nutzkanal (N) zur fernen Einrichtung (B-ILSS) bereitgestellt wird, daß der gerufenen ferne Teilnehmer (B-Tln) über die ihm nahe ILSS-Einrichtung (B-ILSS) angewählt und mit dessen Melden vom rufenden Teilnehmer (A-Tln) zum gerufenen Teilnehmer (B-Tln) ein Nutzkanal (N) hergestellt und bis zum Auslösen der Verbindung gehalten wird,
und daß die über das ISDN-Fernnetz (LODIN) übertragenen Nutzsignale in den ILSS-Einrichtungen (ILSS) vor dem Senden und nach dem Empfangen über für mindestens für zwei Nutzkanäle (N) vorhandene digitale Signalumsetzer (TC) geführt werden, die in Senderichtung die Signalbitrate reduzieren und in Empfangsrichtung das ursprüngliche Digitalsignal wieder rekonstruieren, so daß die bittransparenten 64-kbit/sec-Basiskanäle (B) zwischen den Einrichtungen (ILSS) eine deren Anzahl überschreitende Zahl von Nutzsignalen transportieren können.

2. Verfahren nach Anspruch 1,
**dadurch gekennzeichnet**,
daß die Verbindungs-Mehrfachnutzungs-Einrichtungen (ILSS) automatisch untereinander über das ISDN- Fernnetz (LODIN) bittransparente Wählverbindungen aufbauen, halten und abbauen, deren jeweilige Anzahl stets nur so groß ist, wie für die Übertragung der jeweiligen Summen- Bitrate auf Wähl- und Standleitungen erforderlich.

3. Verfahren nach einem der Ansprüche 1 bis 2,
**dadurch gekennzeichnet**,
daß die vom A-Teilnehmer kommende zusätzliche Signalisierungs- Information von der angewählten ILSS-Einrichtung (A-ILSS) in gleicher Weise aufgenommen wird wie die Durchwahlinformation von einer ISDN-Nebenstellenanlage (ISDN-NStA).

4. Verfahren nach einem oder mehreren der Ansprüche 1 bis 3,
**dadurch gekennzeichnet**,
daß die zusätzliche Signalisierungs- Information des rufenden Teilnehmers in gleicher Weise aufgenommen, wie diese von einer rufenden Einrichtung zur Mehrfachnutzung von ISDN- Verbindungen zwischen NStA (=M(x)-Einrichtung) über das ISDN übertragen wird und daß die Art und Weise der Aufnahme dieser zusätzlichen Signalisierungs- Information in Konfigurationsdaten festgelegt ist.

5. Verfahren nach einem oder mehreren der Ansprüche 1 bis 4,
**dadurch gekennzeichnet**,
daß spätestens mit dem Aufbau eines ersten Nutzkanals (N) zwischen zwei ILSS-Einrichtungen (A/B-ILSS) mindestens ein semipermanenter Signalisierungskanal (S) aufgebaut wird, daß die weitere Signalisierung zwischen diesen Einrichtungen ILSS über diesen Signalisierungskanal (S) erfolgt und
daß schließlich nach dem Abbau des letzten Nutzkanals (N) zwischen diesen ILSS-Einrichtungen (A/B-ILSS) der Signalisierungskanal (S) dann abgebaut wird, wenn dadurch eine Wählverbindung mit zeitabhängigen Gebühren abgebaut werden kann.

6. Verfahren nach einem oder mehreren der Ansprüche 1 bis 5,
**dadurch gekennzeichnet**,
daß für die Berechtigungsprüfung die gerufene ILSS-Einrichtung (A-ILSS) mit der Anwahl aus dem ISDN auch eine Identifizierung (CLI) des rufenden Teilnehmers (A-Tln's) empfängt, daß ein dieser a priori nutzungsberechtigt ist, wenn dessen Anschluß eindeutig durch die empfangene Identifizierung (CLI) gekennzeichnet und nicht in einer Sperrliste eingetragen ist.

7. Verfahren nach einem oder mehreren der Ansprüche 1 bis 6,
**dadurch gekennzeichnet**,
daß für die Berechtigungsprüfung die angewählte ILSS-Einrichtung (A-ILSS) am Fehlen einer vollständigen Identifizierung des rufenden Teilnehmers (CLI) erkennt, daß eine halbautomatische Prüfung der Nutzungsberechtigung gestartet werden muß, daß diese für die Prüfung der Nutzungsberechtigung den rufenden Teilnehmer (A-Tln) auffordert, sich durch Kennziffern gegenüber der angewählten ILSS-Einrichtung (A-ILSS) auszuweisen und daß schließlich die Nutzungsberechtigung dann positiv abgeschlossen ist, wenn der Teilnehmer sich eindeutig ausgewiesen hat und seine Kennziffern nicht in der Sperrliste eingetragen sind.

8. Verfahren nach einem oder mehreren der Ansprüche 1 bis 7,
**dadurch gekennzeichnet**,
daß für die Signalisierung zwischen den ILSS-Einrichtungen (A/B-ILSS) zumindest ein definierter Bruchteil (b') von zumindest einem 64-kbit/sec-Basiskanal als semipermanenter Signalisierungskanal (S) verwendet wird und die um dessen Bitrate verminderte Übertragungskapazität, die durch Stand- und Wählverbindungen bereitgestellt wird, für Nutzkanäle (N) verbleibt.

9. Verfahren nach einem der Ansprüche 1 bis 8,
**dadurch gekennzeichnet**,
daß für zumindest einen Nutzkanal (N) ein Bruchteil b von zumindest einer bittransparenten Standleitung zwischen zwei ILSS-Einrichtungen (A/B-ILSS) verwendet wird, daß diese über Standleitungen bereitgestellten Nutzkanäle (N) stets mit Priorität genutzt und damit die Anzahl der aktiven Wählverbindungen, die zusätzlich für die Übertragung der jeweiligen Summen- Bitrate aller Nutzkanäle (N) und Signalisierungskanäle (S) erforderlich sind, verringert wird.

10. Verfahren nach einem oder mehreren der Ansprüche 1 bis 9,
**dadurch gekennzeichnet**,
daß die digitale Signalumsetzer (TC) in Senderichtung zum ISDN-Fernnetz (LODIN) durch eine Transcodierung das digitalisierte Sprachsignale auf einen Bruchteil (b) der ursprünglichen Bitrate komprimieren und in Empfangsrichtung eine Rekonstruktion in die ursprüngliche Kodierung durchführen.

11. Verfahren nach einem oder mehreren der Ansprüche 1 bis 10,
**dadurch gekennzeichnet**,
daß die digitalen Signalumsetzer (TC) in Senderichtung zum ISDN-Fernnetz (LODIN) vom Teilnehmer kommende Puls-Code-Modulierte (PCM-) FAX/Daten-Modem- Signale in Digitalsignale umsetzen, diese in einem Bruchteil (b) eines 64-kbit/sec-Basiskanals senden und in Empfangsrichtung wieder eine Rekonstruktion in die ursprüngliche PCM-Signal-Darstellung durchführen.

12. Verfahren nach einem oder mehreren der Ansprüche 1 bis 11,
**dadurch gekennzeichnet**,
daß die Funktionsweise der digitalen Signalumsetzer (TC) zwischen mindestens zwei Betriebsarten umschaltbar ist, daß eine erste Betriebsart die eines Transcodierers für Sprache, daß eine zweite Betriebsart die eines FAX/Daten- Modems ist, daß die digitalen Signalumsetzer (TC) eine Signaltyp- Erkennungsfunktion enthalten, welche im Betriebszustand "Sprache" überwacht, ob die Teilnehmer FAX- oder Datenbetrieb wünschen und welche im Betriebszustand FAX/Daten überwacht, ob die Teilnehmer Sprachbetrieb wünschen, daß die erkannte Signalart dem jeweils anderen digitalen Signalumsetzer signalisiert wird und daß schließlich abhängig von der Art des Nutzsignals die Funktionsweise der digitalen Signalumsetzer eingestellt wird.

13. Verfahren nach einem oder mehreren der Ansprüche 1 bis 12,
**dadurch gekennzeichnet,**
daß die ILSS-Einrichtungen (A/B-ILSS) über zwei Leitungsbündel für Wähiverbindungen verfügen, daß ein erstes Leitungsbündel für Wählverbindungen zwischen den vorgenannten Einrichtungen (A/B-ILSS) dient und an eine ISDN- Vermittlungsstelle eines ersten Betreibers angeschlossen ist und daß ein zweites Leitungsbündel für Wählverbindungen zu rufenden/gerufenen Teilnehmern (A/B Teilnehmer) dient und an die ISDN- Vermittlungsstelle eines zweiten Betreibers angeschlossen ist.

14. Verfahren nach einem oder mehreren der Ansprüche 1 bis 13,
**dadurch gekennzeichnet,**
daß die ILSS-Einrichtung (A/B-ILSS) für die Zusammenarbeit mit mindestens einer Einrichtung zur Mehrfachnutzung bittransparenter Verbindungen zwischen NStAn (M(x)) Konfigurationsdaten enthält, welche die berechtigten M(x)-Einrichtungen eindeutig kennzeichnen, daß die angewählte ILSS-Einrichtung (A-ILSS) bei der ersten Anwahl aus einer Einrichtung zur Mehrfachnutzung bittransparenter Verbindungen zwischen NStAn (M(x)) den mehrfachgenutzten 64-kbit/sec-Basiskanal in gleicher Weise in Nutzkanäle (N) und Signalisierungskanäle (S) strukturiert wie die anwählende vorgenannte M(x)-Einrichtung, daß die angewählte ILSS-Einrichtung (A-ILSS) deren Nutzungsberechtigung prüft und die digitalen Signalumsetzer (TC) in gleicher Weise einstellt und zumindest in die benutzten Nutzkanäle (N) einfügt wie die vorgenannte M(x)-Einrichtung und daß die ILSS-Einrichtung (A/B-ILSS) und die Einrichtungen zur Mehrfachnutzung bittransparenter Verbindungen zwischen NStAn (M(x)) Signalisierungen austauschen und aufgrund dessen Verbindungen zwischen dem rufenden und dem gerufenen Teilnehmer herstellen.

15. Verbindungs-Mehrfachnutzungs-Einrichtung (ILSS) zur Mehrfachnutzung von bittransparenten Verbindungen (B) in einem ISDN-Fernnetz (LODIN) durch mehrere voneinander unabhängige Teilnehmer, mit
- mindestens einem Systemprozessor (SP),
- digitalen Signalumsetzern (TC) für mindestens zwei Nutzkanäle,
- mindestens einem digitalen Koppelfeld (DSM = Digital Switching Matrix) und
- einer netzseitigen ISDN-Schnittstellenschaltung (NIC) für mindestens drei Basiskanäle (B), wobei
- die digitalen Signalumsetzer (TC), das mindestens eine digitale Koppelfeld (DSM) und die ISDN-Schnittstellenschaltung (NIC) über mindestens ein Informationsleitungssystem (IB) untereinander und über mindestens ein Steuerleitungssystem (CB) mit dem Systemprozessor (SP) verbunden sind, und wobei
- der Systemprozessor (SP) einen Daten- und Programmspeicher enthält mit darin abgespeicherten Daten und Programmen
-- zum Prüfen der Berechtigung eines die Verbindungs-Mehrfachnutzungs-Einrichtung (ILSS) zum Zwecke eines Verbindungsaufbaus zu einem fernen Teilnehmer (B-Tln) anwählenden Teilnehmers (A-Tln),
-- zum Bereitstellen eines nur einen Teil einer bittransparenten Verbindung (B) belegenden Nutzkanals (N) über das ISDN-Fernnetz (LODIN) zu einer weiteren, dem gerufenen Teilnehmer (B-Tln) nahen Verbindungs-Mehrfachnutzungs-Einrichtung (B-ILSS) und
-- zum Übertragen von durch die Signalumsetzer (TC) komprimierten Nutzdaten des rufenden Teilnehmers (A-Tln) über den Nutzkanal (N) und die weitere, die Nutzdaten dekomprimierende Verbindungs-Mehrfachnutzungs-Einrichtung (B-ILSS) zum gerufenen Teilnehmer (B-Tln).

16. Verbindungs-Mehrfachnutzungs-Einrichtung (ILSS) zur Mehrfachnutzung von bittransparenten Verbindungen (B) in einem ISDN-Fernnetz (LODIN) durch mehrere voneinander unabhängige Teilnehmer,
realisiert auf der Basis einer ISDN-Nebenstellenanlage mit
- mindestens zwei digitalen Signalumsetzern (TC), die mit einem Koppelfeld (DSM) der ISDN-Nebenstellenanlage und mit netzseitigen ISDN-Schnittstellenschaltungen (NIC) der ISDN-Nebenstellenanlage über mindestens ein InformationsLeitungssystem (IB) verbunden sind, und mit
- mindestens einem Systemprozessor (SP), der einen Daten- und Programmspeicher enthält mit darin abgespeicherten Daten und Programmen
-- zum Prüfen der Berechtigung eines die Verbindungs-Mehrfachnutzungs-Einrichtung (ILSS) zum Zwecke eines Verbindungsaufbaus zu einem fernen Teilnehmer (B-Tln) anwählenden Teilnehmers (A-Tln),
-- zum Bereitstellen eines nur einen Teil einer bittransparenten Verbindung (B) belegenden Nutzkanals (N) über das ISDN-Fernnetz (LODIN) zu einer weiteren, dem gerufenen Teilnehmer (B-Tln) nahen Verbindungs-Mehrfachnutzungs-Einrichtung (B-ILSS) und
-- zum Übertragen von durch die Signalumsetzer (TC) komprimierten Nutzdaten des rufenden Teilnehmers (A-Tln) über den Nutzkanal (N) und die weitere, die Nutzdaten dekomprimierende Verbindungs-Mehrfachnutzungs-Einrichtung (B-ILSS) zum gerufenen Teilnehmer (B-Tln).

17. Verbindungs-Mehrfachnutzungs-Einrichtung (ILSS) zur Mehrfachnutzung von bittransparenten Verbindungen (B) in einem ISDN-Fernnetz (LODIN) durch mehrere voneinander unabhängige Teilnehmer,
realisiert auf der Basis eines Büro-Computers (PC) mit
- digitalen Signalumsetzern (TC) für mindestens zwei Nutzkanäle,
- ISDN-Schnittstellenschaltungen (NIC) für mindestens drei Basiskanäle (B) sowie
- mindestens einem digitalen Koppelfeld (DSM = Digital Switching Matrix), das mit den digitalen Signalumsetzern (TC) und mit den ISDN-Schnittstellenschaltungen (NIC) über mindestens ein Informationsleitungssystem (IB) verbunden ist, und wobei
- der Büro-Computer als Systemprozessor (SP) dient und einen Speicher enthält mit darin abgespeicherten Daten und Programmen
-- zum Prüfen der Berechtigung eines die Verbindungs-Mehrfachnutzungs-Einrichtung (ILSS) zum Zwecke eines Verbindungsaufbaus zu einem fernen Teilnehmer (B-Tln) anwählenden Teilnehmers (A-Tln),
-- zum Bereitstellen eines nur einen Teil einer bittransparenten Verbindung (B) belegenden Nutzkanals (N) über das ISDN-Fernnetz (LODIN) zu einer weiteren, dem gerufenen Teilnehmer (B-Tln) nahen Verbindungs-Mehrfachnutzungs-Einrichtung (B-ILSS) und
-- zum Übertragen von durch die Signalumsetzer (TC) komprimierten Nutzdaten des rufenden Teilnehmers (A-Tln) über den Nutzkanal (N) und die weitere, die Nutzdaten dekomprimierende Verbindungs-Mehrfachnutzungs-Einrichtung (B-ILSS) zum gerufenen Teilnehmer (B-Tln).

18. Verbindungs-Mehrfachnutzungs-Einrichtung nach einem der Ansprüche 15 bis 17,
**dadurch gekennzeichnet**,
daß zum Empfangen von Tastwahl- und Leitungszeichen und zum Senden von Hörtönen und Ansagen eine Digitale Service Unit (DSU) enthalten ist, welche diese Zeichen in digital modulierter Kodierung erkennt und diese Töne und Ansagen in digital modulierter Kodierung erzeugt, und
daß die Digitale Service Unit (DSU) über das Informationsleitungssystem (IB) mit dem digitalen Koppelfeld (DSM) und über das Steuerleitungssystem (CB) mit dem Systemprozessor (SP) verbunden ist.

19. Verbindungs-Mehrfachnutzungs-Einrichtung nach einem der Ansprüche 15 bis 18,
**dadurch gekennzeichnet**,
daß für ein wahlfreies Schalten von Subkanälen mindestens ein digitales Koppelfeld (DSM) derart ausgebildet ist, daß Subkanäle individuell geschaltet werden können, und daß mindestens ein Subkanal einem Nutzkanal (N) zugeordnet ist, wobei eine Bitreihenfolge (Bit Sequence Integrity) erhalten bleibt, wenn mehr als ein Subkanal für einen Nutzkanal (N) verwendet wird.

20. Verbindungs-Mehrfachnutzungs-Einrichtung nach einem der Ansprüche 15 bis 19,
**dadurch gekennzeichnet**,
daß für zumindest eine private digitale Verbindungsleitung mindestens eine Schnittstellenschaltung (PLIC = Private Line Interface Circuit) enthalten ist, und
daß diese Schnittstellenschaltung über das Informationsleitungssystem (IB) mit dem digitalen Koppelfeld (DSM) und über das Steuerleitungssystem (CB) mit dem Systemprozessor (SP) verbunden ist.

## Claims

1. Method for multiple use of bit-transparent connections (B) in the integrated service digital network (=ISDN) by a number of mutually independent subscribers by means of multiple use connection devices (ILSS),
characterized
in that at least one device for multiple connection use (=ILSS device) is in each case connected to at least one ISDN switching centre in each case in at least two different local service areas (LSA),
in that the ILSS device (A-ILSS) selected by the calling subscriber (A subscriber) receives additional signalling information, in that the authorization of the calling subscriber is checked, in that signals are interchanged between this abovementioned device (A-ILSS) and the ILSS device (B-ILSS) which is close to the called subscriber (B subscriber),
in that a user channel (N) is provided to the remote device (B-ILSS), in that the called remote subscriber (B subscriber) is selected via the ILSS device (B-ILSS) which is close to it and, by means of its registration, a user channel (N) is set up from the calling subscriber (A subscriber) to the called subscriber (B subscriber) and is maintained until the connection is cleared,
and in that the user signals which are transmitted via the ISDN trunk network (LODIN) are routed in the ILSS devices (ILSS), before being transmitted and after being received, via digital signal converters (TC) which are provided for at least two user channels (N), reduce the signal bit rate in the transmission direction and reconstruct the original digital signal once again in the reception direction, so that the bit-transparent 64 kbps basic channels (B) between the devices (ILSS) can transport a number of user signals greater than the number of such devices.

2. Method according to Claim 1,
characterized
in that the multiple use connection devices (ILSS) automatically set up, maintain and clear bit-transparent dialled connections with one another via the ISDN trunk network (LODIN), the number of which dialled connections is in each case always sufficient to match the number required for transmitting the respective total bit rate on dialled lines and tie lines.

3. Method according to one of Claims 1 or 2,
characterized
in that the additional signalling information coming from the A subscriber is received by the selected ILSS device (A-ILSS) in the same way as the dialled information from an ISDN private branch exchange system (ISDN-NStA).

4. Method according to one or more of Claims 1 to 3,
characterized
in that the additional signalling information of the calling subscriber is received in the same way as that in which it is transmitted via the ISDN from a calling device for multiple use of ISDN connections between NStA (= multiplex device), and in that the nature of reception of this additional signalling information is defined in configuration data.

5. Method according to one or more of Claims 1 to 4,
characterized
in that, at the latest when a first user channel (N) is being set up between two ILSS devices (A/B-ILSS), at least one semi-permanent signalling channel (S) is set up, in that the further signalling between these devices ILSS is carried out via this signalling channel (S) and
in that, finally, once the last user channel (N) between these ILSS devices (A/B-ILSS) has been cleared, the signalling channel (S) is cleared once a dialled connection with time-dependent charges can in consequence be cleared.

6. Method according to one or more of Claims 1 to 5,
characterized
in that, for the authorization check, the called ILSS device (A-ILSS) also receives an identification (CLT) of the calling subscriber (A subscriber) when it is dialled from the ISDN, and in that one of these is a priori authorized for use when its connection is uniquely identified by the received identification (CLI) and is not entered in a banned list.

7. Method according to one or more of Claims 1 to 6,
characterized
in that, for the authorization check, the dialled ILSS device (A-ILSS) uses the lack of complete identification of the calling subscriber (CLI) to identify that a semiautomatic check of the usage authorization must be started, in that, for checking the usage authorization, it requests the calling subscriber (A subscriber) to identify itself to the dialled ILSS device (A-ILSS) by means of identification characters, and in that, finally, the usage authorization is decided as being positive if the subscriber has uniquely identified itself and its identification characters are not entered in the banned list.

8. Method according to one or more of Claims 1 to 7,
characterized
in that at least a defined fraction (b') of at least one 64 kbps basic channel is used as a semi-permanent signalling channel (S) for signalling between the ILSS devices (A/B-ILSS), and the transmission capacity which is provided by tie lines and dialled connections, minus this bit rate, remains for user channels (N).

9. Method according to one of Claims 1 to 8,
characterized
in that a fraction b of at least one bit-transparent tie line between two ILSS devices (A/B-ILSS) is used for at least one user channel (N), in that these user channels (N) which are provided via tie lines are always used with priority, and the number of active dialled connections which are additionally required for transmission of the respective total bit rate of all the user channels (N) and signalling channels (S) is thus reduced.

10. Method according to one or more of Claims 1 to 9,
characterized
in that the digital signal converters (TC) compress the digitized voice signals to a fraction (b) of the original bit rate by means of transcoding in the transmission direction to the ISDN trunk network (LODIN), and carry out reconstruction to the original coding in the reception direction.

11. Method according to one or more of Claims 1 to 10,
characterized
in that the digital signal converters (TC) convert pulse-code-modulated (PCM) FAX/data modem signals coming from the subscriber into digital signals in the transmission direction to the ISDN trunk network (LODIN), transmit these digital signals in a fraction (b) of a 64 kbps basic channel, and carry out a reconstruction to the original PCM signal form once again in the reception direction.

12. Method according to one or more of Claims 1 to 11,
characterized
in that the method of operation of the digital signal converters (TC) can be switched between at least two operating modes, in that a first operating mode is that of a transcoder for voice, in that a second operating mode is that of a FAX/data modem, in that the digital signal converters (TC) contain a signal type identification function which, in the "voice" operating mode, monitors whether the subscribers require FAX or data operation and which, in the FAX/data operating mode, monitors whether the subscribers require voice operation, in that the identified signal type is signalled to the respective other digital signal converter, and in that, finally, the method of operation of the digital signal converters is set as a function of the type of user signal.

13. Method according to one or more of Claims 1 to 12,
characterized
in that the ILSS devices (A/B-ILSS) have two cable groups for dialled connections, in that a first cable group is used for dialled connections between the abovementioned devices (A/B-ILSS) and is connected to an ISDN switching centre of a first operator, and in that a second cable group is used for dialled connections to calling/called subscribers (A/B subscribers) and is connected to the ISDN switching centre of a second operator.

14. Method according to one or more of Claims 1 to 13,
characterized
in that the ILSS device (A/B-ILSS) contains configuration data for interaction with at least one device for multiple use of bit-transparent connections between NStAn (M(x)), which configuration data uniquely identify the authorized multiplex devices, in that the dialled ILSS device (A-ILSS) when first dialled from a device for multiple use of bit-transparent connections between NStAn (M(x)) structures the multiple-use 64 kbps basic channel into user channels (N) and signalling channels (S) in the same way as the abovementioned dialling multiplex device, in that the dialled ILSS device (A-ILSS) checks its usage authorization and sets the digital signal converters (TC) in the same way and inserts them at least into the user channels (N) which are in use in the same way as the abovementioned multiplex device, and in that the ILSS device (A/B-ILSS) and the devices for multiple use of bit-transparent connections between NStAn (M(x)) interchange signals and, on this basis, set up connections between the calling subscriber and the called subscriber.

15. Multiple use connection device (ILSS) for multiple use of bit-transparent connections (B) in an ISDN trunk network (LODIN) by a number of mutually independent subscribers, having
- at least one system processor (SP),
- digital signal converters (TC) for at least two user channels,
- at least one digital switching matrix (DSM) and
- a network-end ISDN interface circuit (NIC) for at least three basic channels (B), in which case
- the digital signal converters (TC), the at least one digital switching matrix (DSM) and the ISDN interface circuit (NIC) are connected to one another via at least one information line system (IB) and are connected to the system processor (SP) via at least one control line system (CB), and in which case
- the system process (SP) contains a data and program memory with data and programs stored in it
-- for checking the authorization of a subscriber (A subscriber) which dials the multiple use connection device (ILSS) for the purpose of setting up a connection to a remote subscriber (B subscriber),
-- for providing a user channel (N) which uses only a portion of a bit-transparent connection (B) via the ISDN trunk network (LODIN) to a further multiple use connection device (B-ILSS) which is close to the called subscriber (B subscriber) and
-- for transmitting user data, which is compressed by the signal converters (TC), from the calling subscriber (A subscriber) via the user channel (N) and the further multiple use connection device (B-ILSS), which decompresses the user data, to the called subscriber (B subscriber).

16. Multiple use connection device (ILSS) for multiple use of bit-transparent connections (B) in an ISDN trunk network (LODIN) by a number of mutually independent subscribers,
provided on the basis of an ISDN private branch exchange system having
- at least two digital signal converters (TC) which are connected to a switching matrix (DSM) in the ISDN private branch exchange system, and to network-end ISDN interface circuits (NIC) in the ISDN private branch exchange system via at least one information line system (IB), and having
- at least one system processor (SP) which contains a data and program memory with data and programs stored in it
-- for checking the authorization of a subscriber (A subscriber) which dials the multiple use connection device (ILSS) for the purpose of setting up a connection to a remote subscriber (B subscriber),
-- for providing a user channel (N) which uses only a portion of a bit-transparent connection (B) via the ISDN trunk network (LODIN) to a further multiple use connection device (B-ILSS) which is close to the called subscriber (B subscriber) and
-- for transmitting user data, which is compressed by the signal converters (TC), from the calling subscriber (A subscriber) via the user channel (N) and the further multiple use connection device (B-ILSS), which decompresses the user data, to the called subscriber (B subscriber).

17. Multiple use connection device (ILSS) for multiple use of bit-transparent connections (B) in an ISDN trunk network (LODIN) by a number of mutually independent subscribers,
provided on the basis of an ISDN private branch exchange system having
- digital signal converters (TC) for at least two user channels,
- ISDN interface circuits (NIC) for at least three basic channels (B), and
- at least one digital switching matrix (DSM) which is connected to the digital signal converters (TC) and to the ISDN interface circuits (NIC) via at least one information line system (IB), and in which case
- the office computer is used as a system processor (SP) and contains a memory with data and programs stored in it
-- for checking the authorization of a subscriber (A subscriber) which dials the multiple use connection device (ILSS) for the purpose of setting up a connection to a remote subscriber (B subscriber),
-- for providing a user channel (N) which uses only a portion of a bit-transparent connection (B) via the ISDN trunk network (LODIN) to a further multiple use connection device (B-ILSS) which is close to the called subscriber (B subscriber) and
-- for transmitting user data, which is compressed by the signal converters (TC), from the calling subscriber (A subscriber) via the user channel (N) and the further multiple use connection device (B-ILSS), which decompresses the user data, to the called subscriber (B subscriber).

18. Multiple use connection device according to one of Claims 15 to 17,
characterized
in that a digital service unit (DSU) is included for receiving push-button-dialled and line characters and for transmitting audible tones and announcements, which digital service unit (DSU) identifies these characters using digitally modulated coding, and produces these tones and announcements using digitally modulated coding, and
in that the digital service unit (DSU) is connected via the information line system (IB) to the digital switching matrix (DSM) and via the control line system (CB) to the system processor (SP).

19. Multiple use connection device according to one of Claims 15 to 18,
characterized
in that, for optional switching of subchannels, at least one digital switching matrix (DSM) is designed in such a manner that subchannels can be switched individually, and in that at least one subchannel is allocated to one user channel (N), with a bit sequence (bit sequence integrity) being maintained when more than one subchannel is used for one user channel (N).

20. Multiple use connection device according to one of Claims 15 to 19,
characterized
in that at least one interface circuit (PLIC = Private Line Interface Circuit) is included for at least one private digital connecting line, and
in that this interface circuit is connected via the information line system (IB) to the digital switching matrix (DSM) and via the control line system (CB) to the system processor (SP).

## Revendications

1. Procédé pour l'utilisation multiple de liaisons (B) transparentes du point de vue des bits dans le réseau numérique à intégration de service (= RNIS) par plusieurs abonnés indépendants les uns des autres, au moyen d'installations ILSS (ILSS) d'utilisation multiple de liaison,
caractérisé
en ce qu'il est raccordé, dans au moins deux zones (LSA) locales différentes, à au moins chaque fois un central RNIS au moins chaque fois une installation pour l'utilisation multiple de liaisons (= installation ILSS),
en ce que l'installation (A-ILSS) ILSS sélectionnée par l'abonné (A-Tln) appelant reçoit de l'information de signalisation supplémentaire, en ce que l'autorisation de l'abonné appelant est vérifiée, en ce que des signalisations entre cette installation (A-ILSS) précitée et l'installation (B-ILSS) ILSS proche de l'abonné (B-Tln) appelé sont échangées,
en ce qu'une voie (N) utile vers l'installation (B-ILSS) éloignée est mise à disposition, en ce que l'abonné (B-Tln) éloigné appelé est sélectionné par l'intermédiaire de l'installation (B-ILSS) ILSS qui en est proche et en ce qu'une voie (N) utile est ménagée par sa réponse de l'abonné (A-Tln) appelant à l'abonné (B-Tln) appelé et que cette voie est maintenue jusqu'à la libération de la liaison,
et en ce que les signaux utiles transmis par l'intermédiaire du réseau (LODIN) interurbain RNIS sont guidés dans les installations (ILSS) ILSS avant l'émission et après la réception par l'intermédiaire de convertisseurs (TC) numériques de signaux, qui sont présents pour au moins deux voies (N) utiles, qui réduisent le débit binaire de signaux dans la direction d'émission et reconstruisent à nouveau dans la direction de réception le signal numérique initial, si bien que les voies (B) de base à 64 kbit/sec transparentes du point de vue des bits peuvent transporter entre les installations (ILSS) un nombre de signaux utiles supérieur à leur nombre.

2. Procédé suivant la revendication 1,
caractérisé
en ce que les installations (ILSS) d'utilisation multiple de liaisons établissent et abolissent automatiquement entre eux, par l'intermédiaire du réseau (LODIN) interurbain RNIS, des liaisons en service automatique transparentes du point de vue des bits dont le nombre n'est toujours égal qu'à ce qui est nécessaire pour la transmission du débit binaire somme associée sur des lignes en service automatique et des lignes spécialisées.

3. Procédé suivant l'une des revendications 1 à 2,
caractérisé
en ce que l'information de signalisation supplémentaire arrivant de l'abonné A est reçue pour l'installation (A-ILSS) ILSS sélectionnée de la même façon que l'information de numérotation directe par un central (ISDN-NStA) privé RNIS.

4. Procédé suivant l'une ou plusieurs des revendications 1 à 3,
caractérisé
en ce que l'information de signalisation supplémentaire de l'abonné appelant est reçue de la même façon que celle-ci est transmise par l'intermédiaire du RNIS par une installation appelant pour l'utilisation multiple de liaisons RNIS entre des NStA (= installation M(x)) et en ce que la façon dont cette information de signalisation supplémentaire est reçue est fixée dans des données de configuration.

5. Procédé suivant l'une ou plusieurs des revendications 1 à 4,
caractérisé
en ce qu'il est établi au plus tard avec l'établissement d'une première voie (N) utile entre deux installations (A/B-ILSS) ILSS au moins une voie (S) de signalisation semi-permanente, en ce que la signalisation supplémentaire s'effectue entre ces deux installations ILSS par l'intermédiaire de cette voie (S) de signalisation et
en ce qu'il est enfin aboli après l'abolissement de la dernière voie (N) utile entre ces installations (A/B-ILSS) ILSS la voie (S) de signalisation si une liaison en service automatique à taxe dépendant de la durée peut être abolie.

6. Procédé suivant l'une ou plusieurs des revendications 1 à 5,
caractérisé
en ce que, pour la vérification d'autorisation, l'installation (A-ILSS) ILSS reçoit avec la sélection, du RNIS, aussi une identification (CLI) de l'abonné (A-Tln) appelant, en ce que l'un de ceux-ci est a priori autorisé à utiliser si son raccordement est caractérisé de manière non univoque par l'identification (CLI) reçue et n'est pas porté dans une liste de blocage.

7. Procédé suivant l'une ou plusieurs des revendications 1 à 6,
caractérisé
en ce que, pour la vérification d'autorisation de l'installation (A-ILSS) ILSS sélectionnée, il est reconnu à l'absence d'une identification complète de l'abonné (CLI) appelant qu'une vérification semi-automatique de l'autorisation d'utilisation doit être commencée, en ce que celle-ci invite pour la vérification de l'autorisation d'utilisation l'abonné (A-Tln) appelant à décliner son identique vis-à-vis de l'installation (A-ILSS) ILSS sélectionnée par des chiffres d'identification et en ce que l'autorisation d'utilisation est enfin achevée de manière positive si l'abonné a décliné son identité de manière non équivoque et que ces chiffres d'identification ne sont pas portés dans la liste de blocage.

8. Procédé suivant l'une ou plusieurs des revendications 1 à 7,
caractérisé
en ce que l'on utilise pour la signalisation entre les installations (A/B-ILSS) ILSS au moins une fraction (b') définie d'au moins une voie de base à 64 kbit/sec comme voie (S) de signalisation semi-permanente et en ce que la capacité de transmission, qui est mise à disposition par des liaisons spécialisées et des liaisons en service automatique reste, diminuée de son débit binaire, pour des voies (N) utiles.

9. Procédé suivant l'une des revendications 1 à 8,
caractérisé
en ce que l'on utilise pour au moins une voie (N) utile une fraction b d'au moins une ligne spécialisée transparente du point de vue des bits entre deux installations (A/B-ILSS) ILSS, en ce que ces voies (N) utiles mises à disposition par l'intermédiaire de lignes spécialisées sont toujours utilisées en priorité et donc que le nombre des liaisons actives en service automatique qui sont nécessaires en plus pour la transmission du débit binaire somme associée de toutes les voies (N) utiles et de toutes les voies (S) de signalisation est diminué.

10. Procédé suivant l'une ou plusieurs des revendications 1 à 9,
caractérisé
en ce que les convertisseurs (TC) numériques de signaux compriment dans la direction d'émission vers le réseau (LODIN) interurbain RNIS, par un transcodage, le signal vocal numérique sur une fraction (b) du débit binaire initial et exécute dans la direction de réception une reconstruction en le codage initial.

11. Procédé suivant l'une ou plusieurs des revendications 1 à 10,
caractérisé
en ce que les convertisseurs (TC) numériques de signaux convertissent dans la direction d'émission vers le réseau (LODIN) interurbain RNIS des signaux de FAX/données modulées par impulsion (PCM), arrivant de l'abonné, en signaux numériques, les émettent en une fraction (b) d'une voie de base à 64 kbit/sec et effectuent dans la direction de réception à nouveau une reconstruction en la représentation initiale de signaux PCM.

12. Procédé suivant l'une ou plusieurs des revendications 1 à 11,
caractérisé
en ce que le mode de fonctionnement des convertisseurs (TC) numériques de signaux peut être commuté entre aux moins deux genres de fonctionnement, en ce qu'un premier genre de fonctionnement est celui d'un transcodeur pour la parole, en ce qu'un deuxième genre de fonctionnement est celui d'un modem FAX/données, en ce que les convertisseurs (TC) numériques de signaux comportent une fonction de reconnaissance de type de signaux qui surveille en l'état de fonctionnement "parole" si les abonnés souhaitent un fonctionnement FAX ou données et qui surveille en l'état de fonctionnement FAX/données si les abonnés souhaitent un fonctionnement en parole, en ce que le genre de signal reconnu est signalé chaque fois à l'autre convertisseur numérique de signaux et en ce que le mode de fonctionnement des convertisseurs numériques de signaux est réglé finalement en fonction du genre du signal utile.

13. Procédé suivant l'une ou plusieurs des revendications 1 à 12,
caractérisé
en ce que les installations (A/B-ILSS) ILSS disposent de deux faisceaux de lignes pour des liaisons en service automatique, en ce qu'un premier faisceau de ligne sert à des liaisons en service automatique entre les installations (A/B-ILSS) précitées et est raccordé à un central RNIS d'un premier exploitant et en ce qu'un deuxième faisceau de ligne sert à des liaisons en service automatique vers des abonnés (abonné A/B) appelant/appelé et est raccordé au central RNIS d'un deuxième exploitant.

14. Procédé suivant une ou plusieurs des revendications 1 à 13,
caractérisé
en ce que l'installation (AIB-ILSS) ILSS contient pour la coopération avec au moins une installation pour l'utilisation multiple de liaisons transparente du point de vue des bits entre des NStAn (M(x)) des données de configuration qui caractérisent de manière non univoque les installations M(x) autorisées, en ce que l'installation (A-ILSS) ILSS sélectionnée lors de la première sélection venant d'une installation pour l'utilisation multiple de liaisons transparentes du point de vue des bits entre des NStAn (M(x)) la voie de base à 64 kbit/sec utilisés de manière multiple de la même façon dans les voies (N) utiles et les voies (S) de signalisation que l'installation M(x) précitée qui sélectionne, en ce que l'installation (A-ILSS) ILSS qui sélectionne vérifie son autorisation d'utilisation et règle les convertisseurs (TC) numériques de signaux et les insère au moins dans les voies (N) utiles utilisées de la même façon que l'installation M(x) précitée et en ce que les installations (A/B-ILSS) ILSS et les installations pour l'utilisation multiple de liaisons transparentes du point de vue des bits entre des NStAn (M(x)) échangent des signalisations et produisent sur cette base des liaisons entre l'abonné appelant et l'abonné appelé.

15. Installation (ILSS) d'utilisation multiple de liaisons pour l'utilisation multiple de liaisons (B) transparentes du point de vue des bits dans un réseau (LODIN) interurbain RNIS par plusieurs abonnés indépendants les uns des autres, comportant
- au moins un processeur (SP) de système,
- des convertisseurs (TC) numériques de signaux pour au moins deux voies utiles,
- au moins un réseau numérique de connexion (DSM = Digital Switching Matrix) et
- un circuit (NIC) d'interface RNIS situé côté réseau pour au moins trois voies (B) de base,
- les convertisseurs (TC) numériques de signaux, le au moins un réseau (DSM) de connexion numérique et le circuit (NIC) d'interface RNIS étant reliés par l'intermédiaire d'au moins un système (IB) de ligne d'information les uns aux autres et par l'intermédiaire d'au moins un système (CB) de ligne de commande au processeur (SP) du système, et
- le processeur (SP) du système contenant une mémoire de données et une mémoire de programme comportant des données et des programmes qui sont mémorisés,
-- pour la vérification de l'autorisation d'un abonné (A-Tln) sélectionnant l'installation (ILSS) d'utilisation multiple de liaisons aux fins d'un établissement de liaison avec un abonné (B-Tln) éloigné,
-- pour mettre à disposition une voie (N) utile occupant une partie d'une liaison (B) transparente du point de vue des bits par l'intermédiaire du réseau (LODIN) interurbain RNIS vers un autre installation (B-ILSS) d'utilisation multiple de liaisons proche de l'abonné (B-Tln) appelé et
-- pour transmettre des données utiles de l'abonné (A-Tln) appelant comprimé par les convertisseurs (TC) de signaux par l'intermédiaire de la voie (N) utile et de l'installation (B-ILSS) supplémentaire d'utilisation multiple de liaisons décomprimant les données utiles, à l'abonné (B-TIn) appelé.

16. Installation (ILSS) d'utilisation multiple de liaisons pour l'utilisation multiple de liaisons (B) transparentes du point de vue des bits dans un réseau (LODIN) interurbain ISDN par plusieurs abonnés indépendants les uns des autres,
réalisée sur la base d'un central privé RNIS comportant
- au moins deux convertisseurs (TC) numériques de signaux qui sont reliés à un réseau (DSM) de connexion du central privé RNIS et à des circuits (NIC) d'interface RNIS situés du côté du réseau du central privé RNIS par l'intermédiaire d'au moins un système (IB) de ligne d'information, et comportant
- au moins un processeur (SP) de système qui contient une mémoire de données et une mémoire de programme comportant des données et des programmes qui sont mis en mémoire
-- pour vérifier l'autorisation d'un abonné (A-Tln) sélectionnant l'installation (ILSS) d'utilisation multiple de liaisons à des fins d'un établissements de liaison un abonné (B-Tln) éloigné,
-- pour mettre à disposition une voie (N) utile n'occupant qu'une partie d'une liaison (B) transparente du point de vue des bits par l'intermédiaire du réseau (LODIN) interurbain RNIS vers une installation (B-ILSS) supplémentaire d'utilisation multiple de liaisons proche de l'abonné (B-Tln) appelé, et
-- pour transmettre des données utiles de l'abonné (A-Tln) appelant comprimé par le convertisseur (TC) de signaux, par l'intermédiaire de la voie (N) utile et par l'intermédiaire de l'installation (B-ILSS) supplémentaire d'utilisation multiple de ligne décomprimant les données utiles, à l'abonné (B-Tln) appelé.

17. Installation (ILSS) d'utilisation multiple de liaisons pour l'utilisation multiple de liaisons (B) transparentes du point de vue des bits dans un réseau (LODIN) interurbain ISDN par plusieurs abonnés indépendants les uns des autres,
réalisé sur la base d'un ordinateur (PC) de bureau comportant
- des convertisseurs (TC) numériques de signaux pour au moins deux voies utiles,
- des circuits (NIC) d'interface RNIS pour au moins trois voies (B) de base ainsi que
- au moins un réseau (DSM = Digital Switching Matrix) numérique de connexion qui est relié au convertisseur (TC) numérique de signaux et au circuit (NIC) d'interface RNIS par l'intermédiaire d'au moins un système (IB) de lignes d'information, et
- l'ordinateur de bureau servant de processeur (SP) du système et contenant une mémoire comportant des données et des programmes qui sont mis en mémoire,
-- pour vérifier l'autorisation d'un abonné (A-Tln) sélectionnant l'installation (ILSS) d'utilisation multiple de liaisons à des fins d'un établissements de liaison un abonné (B-Tln) éloigné,
-- pour mettre à disposition une voie (N) utile n'occupant qu'une partie d'une liaison (B) transparente du point de vue des bits par l'intermédiaire du réseau (LODIN) interurbain RNIS vers une installation (B-ILSS) supplémentaire d'utilisation multiple de liaisons proche de l'abonné (B-Tln) appelé, et
-- pour transmettre des données utiles de l'abonné (A-TIn) appelant comprimé par le convertisseur (TC) de signaux, par l'intermédiaire de la voie (N) utile et par l'intermédiaire de l'installation (B-ILSS) supplémentaire d'utilisation multiple de ligne décomprimant les données utiles, à l'abonné (B-Tln) appelé.

18. Installation d'utilisation multiple de liaisons suivant l'une des revendications 15 à 17,
caractérisée
en ce que, pour recevoir des signaux de numérotation clavier et des signaux de ligne et pour émettre des tonalités et des messages enregistrés, il est contenu une Digitale Service Unit (DSU) qui reconnaît ces signaux en codage modulé numériquement et produit ces tonalités et ces messages enregistrés en codage modulé numériquement, et
en ce que la Digitale Service Unit (DSU) est reliée par l'intermédiaire du système (IB) de ligne d'information au réseau (DSM) numérique de connexion et par l'intermédiaire du système (CB) de ligne de commande au processeur (SP) du système.

19. Installation d'utilisation multiple de liaisons suivant l'une des revendications 15 à 18,
caractérisée
en ce qu'au moins un réseau (DSM) numérique de connexion est réalisé pour un branchement au choix de sous-voies de telle manière que des sous-voies peuvent être branchées de manière individuelle, et en ce qu'il est associé au moins une sous-voie à une voie (N) utile, une séquence de bits restant maintenue (Bit Sequence Integrity) si plus d'une sous-voie est utilisée pour une voie (N) utile.

20. Installation d'utilisation multiple de liaisons suivant l'une des revendications 15 à 19,
caractérisée
en ce qu'il est contenu pour au moins une ligne de liaison numérique privée au moins un circuit d'interface (PLIC = Private Line Interface Circuit), et
en ce que ce circuit d'interface est relié par l'intermédiaire du système (IB) de ligne d'information au réseau (DSM) numérique de connexion et par l'intermédiaire du système (CB) de ligne de commande au processeur (SP) du système.
